# EUROPÄISCHE PATENTSCHRIFT

(11) **EP 1 909 022 B1**
(45) Veröffentlichungstag und Bekanntmachung des Hinweises auf die Patenterteilung: **17.08.2011**
(21) Anmeldenummer: 07117698.6
(22) Anmeldetag: 02.10.2007
(51) Int. Cl.: F16N 29/00, F16H 57/04

(54) **Anordnung eines Magnetstopfens oder Spänewarngebers für ein Getriebe oder eine Maschine**
Assembly of a magnetic plug or filing alarm for a transmission system or a machine
Agencement d'un bouchon magnétique ou dispositif d'alerte de copeaux pour un engrenage ou une machine

(30) Priorität: 06.10.2006 DE 102006047767
(43) Veröffentlichungstag der Anmeldung: 09.04.2008
(73) Patentinhaber: ZF Friedrichshafen AG, 88038 Friedrichshafen (DE)
(72) Erfinder: Platzer, Michael, 34302 Ellenberg (DE); Schappert, Hartmut, 34128 Kassel (DE)
(74) Vertreter: Zietlow, Karl-Peter

(56) Entgegenhaltungen:
- EP-A- 0 882 510
- US-A- 1 806 001
- US-A- 2 755 932
- US-A- 4 773 995
- US-A- 5 383 534

## Beschreibung

Die vorliegende Erfindung bezieht sich auf eine Anordnung eines Magnetstopfens oder Spänewarngebers für ein Getriebe oder eine Maschine gemäß dem Oberbegriff des Patentanspruchs 1.

Ein Magnetstopfen umfasst nach dem Stand der Technik im Wesentlichen einen Magneten und eine Halterung für den Magneten. Üblicherweise werden Magnetstopfen in Schrauben integriert, die in das Gehäuse verschraubt werden; es ist auch bekannt, Magnetstopfen in die Ölablassschraube zu integrieren. Durch die magnetische Kraft des Magnetstopfens werden kleine Metallpartikel bzw. Späne, die beispielsweise durch Lagerschäden entstehen, aufgefangen, wodurch die Funktionalität des Getriebes sowie eine hohe Lebensdauer gewährleistet wird.

Ein Spänewarngeber besteht im Wesentlichen aus einem Magneten, einer Halterung hierfür und einer im Bereich des Magneten durch Partikel bzw. Späne elektrisch kurzschließbaren Verbindung Derartige Einrichtungen werden zur Auffindung und zum Festhalten magnetisierbarer Partikel und zum Zweck der elektrischen Anzeige ihrer Existenz eingesetzt. Aus baulichen Gründen ist nach dem Stand der Technik die Positionierung und Befestigung herkömmlicher Magnetstopfen bzw. Spänewarngebern auf die Getriebe/ Maschinengehäusewandungen begrenzt.

Die US 5383534, die als nächster Stand der Technik angesehen wird, zeigt einen Magnetstopfen, der aus einer Schraube, bzw. einer Ölablassschraube und einem flexiblen Magneten besteht. Durch die Flexibilität des Magneten ist es möglich, diesen an die geometrischen Gegebenheiten im Inneren des Maschinengehäuses anzupassen und den Wirkungsbereich des Magneten zu vergrößern. Seine Befestigung erfolgt an der Gehäusewand des Maschinengehäuses, da in diesem das Gewinde zur Befestigung des Magnetstopfens ausgebildet ist.

Der vorliegenden Erfindung liegt die Aufgabe zugrunde, eine Anordnung eines Magnetstopfens oder Spänewarngebers für ein Getriebe oder eine Maschine anzugeben, durch die die Positionierung und Befestigung von Magnetstopfen bzw. Spänewamgebem unabhängig von den Getriebe/ Maschinengehäusewandungen gestaltbar ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, dass der Magnetstopfen oder Spänewarngeber ein koaxial zu einer Steuerstange angeordnetes Trägerrohr aufweist, in dem eine manuel verschiebbare Schubstange angeordnet ist. Außerdem umfasst der Magnetstopfen oder Spänewarngeber ein einen Magnet- bzw. Spänewamgeberkopf umfassendes Oberteil, wobei das Oberteil mit dem Trägerrohr über ein Drehgelenk gelenkig verbunden ist. Hierbei wirkt die Schubstange derart auf eine mit dem Drehgelenk gelenkig verbundene Pleuelstange, so dass bei einer Betätigung der Schubstange in Richtung des Oberteils eine Kippbewegung des Oberteils zur Herstellung einer formschlüssigen Verbindung mit der Steuerstange erzielbar ist.

In Weiterbildung des erfindungsgemäßen Gegenstandes weist das Oberteil Auflage- und Justierpunkte auf, die eine genaue Positionierung und Abstützung an der im Getriebe bzw. in der Maschine angeordneten Steuerstange ermöglichen.

Außerdem kann gemäß der Erfindung vorgesehen sein, dass an dem dem Oberteil abgewandten Ende der Schubstange eine Feder vorgesehen ist, durch deren Federkraft das Oberteil nach der Herstellung der formschlüssigen Verbindung auf die Steuerstange gedrückt wird.

Die Erfindung wird im Folgenden anhand der beigefügten Figuren beispielhaft näher erläutert: Es zeigen:
- Figur 1:: Einen Spänewarngeber, welcher gemäß der Erfindung mit einer Steuerstange eines Getriebes formschlüssig verbunden ist;
- Figur 2:: Den Spänewarngeber aus Figur 1 im entriegelten Zu- stand; und
- Figur 3:: Eine vergrößerte Ansicht des Oberteils der Späne- warngebers aus Figur 1.

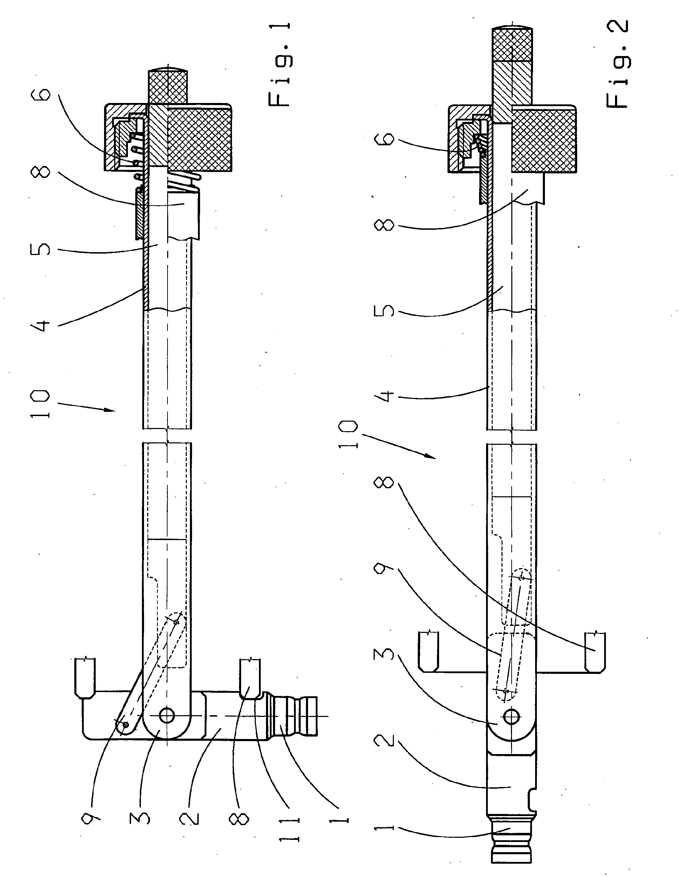

In Figur 1 ist ein Spänewarngeber 10 gezeigt, umfassend einen auf einem Oberteil 2 angeordneten Spänewarngeberkopf 1 üblicher Bauform, wobei das Oberteil 2 mit Hilfe eines manuell betätigbaren Drehgelenkes 3 zur Herstellung einer formschlüssigen Verbindung mit einer im Getriebe vorgesehenen Steuerstange 8 um 90°, d.h. senkrecht zur Steuerstange 8 gekippt werden kann. Hierbei weist der Spänewarngeber 10 ein koaxial zur Steuerstange 8 angeordnetes Trägerrohr 4 auf, in dem eine manuell verschiebbare Schubstange 5 angeordnet ist, welche auf eine mit dem Drehgelenk 3 gelenkig verbundene Pleuelstange 9 wirkt, so dass eine Kippbewegung des Oberteils 2 des Spänewarngebers 10 erzielbar ist.

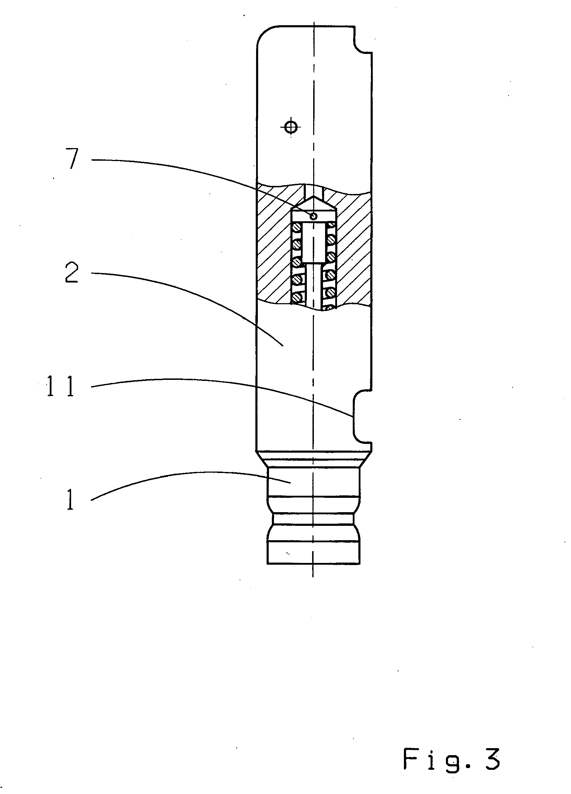

Durch die Kippbewegung des Oberteils 2 entsteht eine einseitig formschlüssige Verbindung zwischen dem Oberteil 2 und der Steuerstange 8 des Getriebes, wie in Figur 1 veranschaulicht; das drehbare Oberteil 2 weist bei dem gezeigten Beispiel gemäß Figur 3 Auflage- und Justierpunkte 11 bzw. 7 auf, die eine genaue Positionierung und Abstützung an der im Getriebe angeordneten Steuerstange 8 erlauben. Des weiteren ist an dem dem drehbaren Oberteil 2 abgewandten Ende der Schubstange 5 eine Feder 6 vorgesehen, durch deren Federkraft das Oberteil 2 nach der Herstellung der formschlüssigen Verbindung auf die Steuerstange 8 gedrückt wird.

Hierbei ist die Ausführung und Dimensionierung des Trägerrohrs 4 und der Schubstange 5 auf die konstruktiven bzw. räumlichen Verhältnisse abgestimmt, die durch den konkreten Einsatzfall vorgegeben sind.

In Figur 2 ist der Spänewarngeber 10 aus Figur 1 im entriegelten Zustand gezeigt (Schubstange 5 ist nicht in Richtung auf das Oberteil 2 verschoben).

Obwohl die Figuren die Anordnung eines Spänewarngebers in einem Getriebe veranschaulichen, ist das dargestellte Prinzip des Verriegelungs- bzw. Festsetzmechanismus auf die Anordnung in einer Maschine bzw. auf die Anordnung eines Magnetstopfens in einem Getriebe oder in einer Maschine übertragbar.

Selbstverständlich fällt auch jede konstruktive Ausbildung, insbesondere jede räumliche Anordnung der Bauteile an sich sowie zueinander und soweit technisch sinnvoll, unter den Schutzumfang der vorliegenden Ansprüche, ohne die Funktion der Anordnung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Spänewamgeberkopf
- 2: Oberteil des Spänewarngebers
- 3: Drehgelenk
- 4: Trägerrohr
- 5: Schubstange
- 6: Feder
- 7: Justierpunkt
- 8: Steuerstange
- 9: Pleuelstange
- 10: Spänewarngeber
- 11: Auflagepunkt

## Patentansprüche

1. Anordnung eines Magnetstopfens oder Spänewarngebers (10) für ein Getriebe oder eine Maschine, wobei der Magnetstopfen oder Spänewarngeber ein einen Magnet-bzw. Spänewarngeberkopf (1) umfassendes Oberteil (2) umfasst, **dadurch gekennzeichnet, dass** der Magnetstopfen oder Spänewarngeber (10) ein koaxial zu einer Steuerstange (8) angeordnetes Trägerrohr (4) aufweist in dem eine manuel verschiebbare Schubstange (5) angeordnet ist, wobei das Oberteil (2) mit dem Trägerrohr (4) über ein Drehgelenk (3) gelenkig verbunden ist, wobei die Schubstange (5) auf eine mit dem Drehgelenk (3) gelenkig verbundene Pleuelstange (9) wirkt, derart, dass bei einer Betätigung der Schubstange in Richtung des Oberteils (2) eine Kippbewegung des Oberteils (2) zur Herstellung einer formschlüssigen Verbindung mit der Steuerstange (8) erzielbar ist.

2. Anordnung eines Magnetstopfens oder Spänewarngebers (10) für ein Getriebe oder eine Maschine, nach Anspruch 1, **dadurch gekennzeichnet, dass** das Oberteil (2) Auflage- und Justierpunkte (11, 7) zur Ermöglichung einer genauen Positionierung und Abstützung an der im Getriebe bzw. in der Maschine angeordneten Steuerstange (8) aufweist.

3. Anordnung eines Magnetstopfens oder Spänewarngebers (10) für ein Getriebe oder eine Maschine, nach Anspruch 1 oder 2, **dadurch gekennzeichnet, dass** an dem dem Oberteil (2) abgewandten Ende der Schubstange (5) eine Feder (6) vorgesehen ist, durch deren Federkraft das Oberteil (2) nach der Herstellung der formschlüssigen Verbindung auf die Steuerstange (8) gedrückt wird.

## Claims

1. Arrangement of a magnetic plug or chip warning transducer (10) for a gearbox or a machine, the magnetic plug or chip warning transducer comprising an upper part (2) which comprises a magnetic or chip warning transducer head (1), **characterized in that** the magnetic plug or chip warning transducer (10) has a carrier tube (4) which is arranged coaxially with respect to a control rod (8) and in which is arranged a manually movable push rod (5), the upper part (2) being articulatedly connected to the carrier tube (4) via a rotary joint (3), the push rod (5) acting on a connecting rod (9) articulatedly connected to the rotary joint (3), in such a way that, during an actuation of the push rod in the direction of the upper part (2), a tilting movement of the upper part (2) can be obtained in order to produce a positively locking connection to the control rod (8).

2. Arrangement of a magnetic plug or chip warning transducer (10) for a gearbox or a machine, according to Claim 1, **characterized in that** the upper part (2) has support and alignment points (11, 7) for permitting precise positioning and support on the control rod (8) arranged in the gearbox or in the machine.

3. Arrangement of a magnetic plug or chip warning transducer (10) for a gearbox or a machine, according to Claim 1 or 2, **characterized in that** a spring (6) is provided on that end of the push rod (5) which faces away from the upper part (2), by means of the spring force of which spring the upper part (2) is pressed against the control rod (8) after the positively locking connection is produced.

## Revendications

1. Agencement d'un bouchon magnétique ou d'un détecteur d'avertissement de copeaux (10) pour un engrenage ou une machine, le bouchon magnétique ou le détecteur d'avertissement de copeaux comprenant une partie supérieure (2) comprenant une tête (1) d'aimant ou de détecteur d'avertissement de copeaux, **caractérisé en ce que** le bouchon magnétique ou le détecteur d'avertissement de copeaux (10) présente un tube porteur (4) disposé coaxialement par rapport à une tige de commande (8), dans lequel est disposée une tige poussoir déplaçable manuellement (5), la partie supérieure (2) étant connectée de manière articulée par le biais d'une liaison pivotante (3) au tube porteur (4), la tige poussoir (5) agissant sur une bielle (9) connectée de manière articulée à la liaison pivotante (3), de telle sorte que dans le cas d'un actionnement de la tige poussoir dans la direction de la partie supérieure (2), un mouvement de basculement de la partie supérieure (2) puisse être réalisé pour créer une liaison par engagement par correspondance géométrique avec la tige de commande (8).

2. Agencement d'un bouchon magnétique ou d'un détecteur d'avertissement de copeaux (10) pour un engrenage ou une machine, selon la revendication 1, **caractérisé en ce que** la partie supérieure (2) présente des points d'appui et d'ajustement (11, 7) pour permettre un positionnement exact et un support sur la tige de commande (8) disposée dans l'engrenage ou dans la machine.

3. Agencement d'un bouchon magnétique ou d'un détecteur d'avertissement de copeaux (10) pour un engrenage ou une machine, selon la revendication 1 ou 2, **caractérisé en ce qu'**un ressort (6) est prévu sur l'extrémité de la tige poussoir (5) opposée à la partie supérieure (2), dont la force de ressort pousse la partie supérieure (2) sur la tige de commande (8) après l'établissement de la connexion par engagement par correspondance géométrique.
